# EUROPÄISCHE PATENTSCHRIFT

(11) **EP 0 639 492 B1**
(45) Veröffentlichungstag und Bekanntmachung des Hinweises auf die Patenterteilung: **30.10.1996**
(21) Anmeldenummer: 94111484.5
(22) Anmeldetag: 22.07.1994
(51) Int. Cl.: B62D 33/02

(54) **Riegelverschluss**
Bolt lock
Verrou à pêne

(30) Priorität: 06.08.1993 DE 9311767 U
(43) Veröffentlichungstag der Anmeldung: 22.02.1995
(73) Patentinhaber: KARL HILDEBRAND GmbH, D-40699 Erkrath (DE)
(72) Erfinder: Kockel, Wolfgang, D-40699 Erkrath (DE)
(74) Vertreter: Heim, Hans-Karl, Dipl.-Ing.

(56) Entgegenhaltungen:
- DE-A- 1 580 650
- DE-A- 2 608 554
- DE-B- 2 507 473

## Beschreibung

Die Erfindung betrifft einen Riegelverschluß für Bordwände von Nutzfahrzeugen gemäß Oberbegriff des Anspruchs 1.

Derartige Riegelverschlüsse weisen gewöhnlich einen einstückig ausgebildeten Riegelhebel mit einem abgewinkelten Verschlußhaken auf, der in Schließstellung ein Gegenlager, beispielsweise eine Öse, hintergreift. Diese Riegelverschlüsse werden zum An- oder Verriegeln von Bordwänden an Rungen eingesetzt. Grundsätzlich besteht die Möglichkeit, den Riegelhebel in jedes Hohlprofil, beispielsweise in einen vertikalen Pfosten oder in eine Säule, einzubauen und Bordwände in vertikaler Stellung zu verriegeln. Wenn nachfolgend der Begriff Runge benutzt wird, sind ähnliche Hohlprofile, Hohlkörper oder Säulen eingeschlossen.

Ein Nachteil der bisher bekannten hebelartigen Riegelverschlüsse für Bordwände besteht darin, daß beim Entriegeln ein gegebenenfalls vorhandener Innendruck, beispielsweise aufgrund einer verschobenen Ladung, nicht erkennbar und eine Gefährdung des Bedienungspersonals durch unkontrolliert abklappende Bordwände oder herabfallendes Ladegut nicht auszuschließen ist (siehe beispielsweise DE-A-2608554).

Der Erfindung liegt die **Aufgabe** zugrunde, einen Riegelverschluß mit einem in einer Runge angeordneten, vertikal schwenkbaren Riegelhebel zu schaffen, der bei einem einfachen und robusten Aufbau eine zuverlässige Verriegelung und insbesondere ein gefahrloses Abklappen einer mit Innendruck belasteten Bordwand gewährleistet.

Erfindungsgemäß wird die Aufgabe durch die kennzeichnenden Merkmale des Anspruchs 1 gelöst. Zweckmäßige und vorteilhafte Ausgestaltungen sind in den Unteransprüchen und in der Figurenbeschreibung enthalten.

Der Erfindung liegt die Überlegung zugrunde, eine Blockierung der Schwenkbewegung beim Entriegeln des Riegelhebels mit Hilfe von Rastelementen zu erreichen, wobei die Rastelemente in einer bestimmten Stellung miteinander in Eingriff gelangen und die Öffnungs-Schwenkbewegung des Riegelhebels unterbrochen wird.

Erfindungsgemäß sind Rastelemente an einer Anlenkachse des Riegelhebels und im Bereich einer Grundfläche eines Hohlprofils bzw. einer Runge ausgebildet, die bei einem auf die Innenfläche einer Bordwand ausgeübten Druck in einer Einraststellung die Schwenkbewegung des Riegelhebels hemmen.

Eine Einraststellung wird durch eine innendruckbelastetete Bordwand hervorgerufen, bei welcher beim Öffnungsvorgang, d.h. beim Lösen eines am Riegelhebel ausgebildeten Verschlußhakens aus einem Gegenhalter der Bordwand, der Innendruck auf den Verschlußhaken wirkt und zu einer Schrägstellung des Riegelhebels führt. In Schließstellung und beim Öffnen des Riegelhebels ist der Riegelhebel parallel zur Grundfläche der Runge geführt.

Bei einer Schrägstellung rastet ein Anlenkbolzen mit einem freien Bolzenende als Rastelement der Anlenkachse in eine Einrastöffnung ein. Die Einrastöffnung ist als komplementäres Rastelement im Bereich der Rungengrundfläche, bevorzugt in einer zusätzlich in der Runge befestigten Aufnahmeplatte ausgebildet. Die Einrastöffnung weist einen Durchmesser auf, der zweckmäßigerweise um einen Faktor von 1,5 bis 2,0 größer ist als der Durchmesser des freien Bolzenendes des Anlenkbolzens.

Es besteht die Möglichkeit, den Bolzenschaft des Anlenkbolzens im einrastenden Endbereich mit einem geringeren oder auch mit einem größeren Durchmesser zu versehen. In einer besonders vorteilhaften Ausbildung wird eine sichere Raststellung durch eine sphärische Formgestaltung des Endbereiches des Bolzenschaftes und durch eine komplementäre Ausbildung der Einrastöffnung in der Aufnahmeplatte erreicht.

Damit eine Blockierung der Öffnungs-Schwenkbewegung bei einem definierten, beispielsweise durch Normvorschriften vorgegebenen Innendruck erfolgt, wird der Anlenkbolzen druckbeaufschlagt, beispielsweise mit Hilfe einer Federkraft, in einer Schwenkstellung gehalten.

In einer zweckmäßigen Ausgestaltung ist eine Druckfeder auf zwei jeweils endseitig am Bolzenschaft des Anlenkbolzens fixierten Führungsringen abgestützt.

Als Druckfeder kann eine Schraubendruckfeder oder eine Blattfeder eingesetzt sein, deren Druckkraft einem vorgegebenen Ladungsinnendruck entgegenwirkt.

In einer Weiterbildung kann die Schwenkstellung des Anlenkbolzens mit Hilfe eines vorgespannten Elementes, welches im Bereich der Einrastöffnung auf den Anlenkbolzen einwirkt, gewährleistet sein.

Wesentlich ist eine einstellbare Druckkraft, die den Anlenkbolzen außerhalb der Einrastöffnung in einer Schwenkstellung hält und lediglich bei einem definierten Innendruck auf die Bordwand zu einer Schrägstellung des Riegelhebels, zu einem entsprechenden Druck auf die Druckfeder und zum Einrasten des Bolzenschaftes in die Einrastöffnung führt.

Der Anlenkbolzen ist parallel zur Schwenkachse des Riegelhebels angeordnet. Bevorzugt ist als Schwenkachse eine Welle in der Runge befestigt, um welche der Riegelhebel mit Spiel verschwenkbar geführt ist.

Die Öffnungs- und Schließstellung wird sinnvollerweise durch ein Bedienungselement, welches im Bereich der Anlenkachse angreift, ausgelöst. Beispielsweise kann ein Handhebel in der Runge in vertikaler Richtung bewegt werden, um eine Schwenkbewegung des Riegelhebels um die horizontal angeordnete Schwenkachse zu erreichen. Zur Dämpfung der Riegelbewegung und zur Vermeidung von Verunreinigungen sind Kunststoffelemente im Bereich der Welle der Schwenkachse vorgesehen. Insbesondere zur Abdichtung einer Hohlprofilöffnung, durch welche der Riegelhaken mit einem abgewinkelten Ende reicht, ist ein Kunststoffring am Umfang der Welle vorgesehen.

Die Erfindung wird nachstehend anhand einer Zeichnung weiter beschrieben; in dieser zeigen in einer stark schematisierten Darstellung:
- Fig. 1: einen horizontalen Querschnitt durch einen Riegelverschluß, dessen Riegelhebel in einer Runge befestigt ist;
- Fig. 2: eine Ansicht eines Riegelverschlusses nach Pfeil A gemäß Fig. 1 ohne Runge;
- Fig. 3: einen horizontalen Querschnitt durch eine Blattfeder, welche alternativ in einen Riegelverschluß nach Fig. 1 einzusetzen ist und
- Fig. 4: eine Ansicht einer Blattfeder nach Pfeil B gemäß Fig. 3.

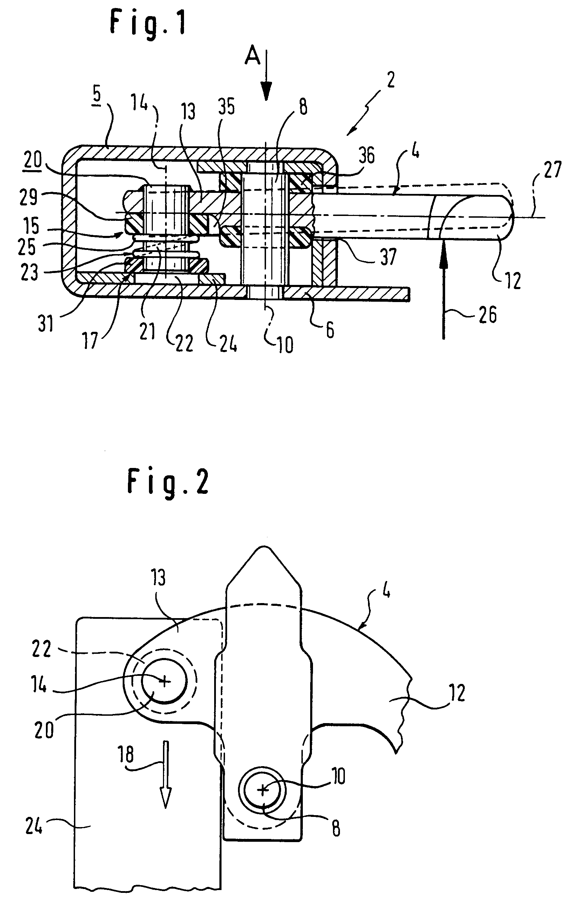

In Fig. 1 ist in stark schematisierter Weise ein Riegelverschluß 2 mit einem Riegelhebel 4 dargestellt, der in einem Hohlprofil 5, beispielsweise in einer vertikal angeordneten Runge, mit einer als Welle 8 ausgebildeten Schwenkachse 10 befestigt ist.

Der Riegelhebel 4 mit der zwischen einem Riegelhaken 12 und einem Anlenkbereich 13 mit Anlenkachse 14 horizontal angeordneten Schwenkachse 10 ist vertikal verschwenkbar, wobei der Riegelhaken 12 in einer Schließstellung einen Gegenhalter, beispielsweise eine Öse, einer Bordwand (nicht dargestellt) hintergreift.

Mit Hilfe eines Bedienungselementes (nicht dargestellt), welches im Anlenkbereich 13 angreift und beispielsweise lösbar verbunden sein kann, wird ein Verschwenken des Riegelhebels 4 gemäß Pfeil 18 (siehe Fig. 2) und ein Entriegeln einer Bordwand im Bereich eines Riegelverschlusses erreicht.

Um die Verletzungsgefahr durch Abklappen einer Bordwand bei auf die Innenfläche derselben durch eine Ladung ausgeübten Druck weitgehend zu vermeiden, sind im Bereich des Hohlprofils 5 und im Anlenkbereich 13 zusammenwirkende Rastelemente 15, 17 vorgesehen, die bei Innendruck in eine eine weitere Öffnung des Riegelhebels blockierende Einraststellung gelangen.

Als Rastelement 15 ist an der Anlenkachse 14 ein Anlenkbolzen 20 und als Rastelement 17 des Hohlprofils 5 ist eine Einrastöffnung 22 in einer an der Grundfläche 6 des Hohlprofils 5 befestigten, beispielsweise angeschweißten Aufnahmeplatte 24 ausgebildet. Die Einrastöffnung 22 ist kreisförmig ausgebildet und weist einen Durchmesser auf, der etwa um den Faktor 1,5 bis 2,0 größer ist als der Durchmesser des einrastenden Bolzenendes des Anlenkbolzens 20. Die Aufnahmeplatte 24 ist nahezu 1,5 mm stark, so daß das einrastende Bolzenende des Anlenkbolzens 20 in einer sicheren Einraststellung gehalten ist. Wenn bei Innendruck eine Bordwand auf einen teilweise gelösten Verschlußhaken 12 einwirkt, wie durch einen Pfeil 26 in Fig. 1 angedeutet ist, wird der Riegelhebel 4 in eine Schrägstellung, bezogen auf seine parallel zur Runge ausgebildeten Längsachse 27, bewegt, wodurch der Anlenkbolzen 20 in die Einrastöffnung 22 gedrückt wird. In dieser Einraststellung kann der Riegelhebel 4 nicht mehr verschwenkt werden. Erst nach Beseitigung des anliegenden Innendrucks und bei einer nahezu lotrechten Bordwand kann der Riegelhebel 4, der sich wieder in einer parallel zum Hohlprofil 5 ausgerichteten Schwenkstellung befindet, bewegt werden.

Besonders vorteilhaft ist die Anordnung einer Druckfeder 23, insbesondere einer Schraubendruckfeder 25, die den Anlenkbolzen 20 bis zu einem definierten, einstellbaren Druck, beispielsweise bis 22 kp, in Schwenkstellung hält und bei einem auf die Bordwand ausgeübten Innendruck von beispielsweise 22 bis 25 kp ein Einrasten des Anlenkbolzens 20 in die Einrastöffnung 22 gewährleistet.

Die Schraubendruckfeder 25 ist bevorzugt lösbar im Bereich des Anlenkbolzens 20 gehalten, um ein unkompliziertes Auswechseln und gegebenenfalls eine Änderung des Druckfederbereichs zu ermöglichen.

In Fig. 2 ist in einer ausschnittsweisen Ansicht der Riegelhebel 4 mit Schwenkachse 10, angedeutetem Verschlußhaken 12, Anlenkbereich 13 und Anlenkachse 14 sowie die Aufnahmeplatte 24 mit Einrastöffnung 22 dargestellt.

Der Riegelhebel 4 ist mit Spiel auf der als Schwenkachse 10 ausgebildeten Welle 8 angeordnet, um eine in Fig. 1 mit strichlierten Linien angedeutete schräge Einraststellung zu ermöglichen. In diesem Ausführungsbeispiel beträgt die schräge Einraststellung etwa 3 bis 4 Grad bezogen auf eine parallel zum Hohlprofil 5 verlaufenden Längsachse 27 des Riegelhebels 4.

Die Schraubendruckfeder 25 gemäß Fig. 1 ist auf einem riegelhebelseitigen Führungsring 29 bzw. der Anlenkung vom Hebelteil und auf einem an der Aufnahmeplatte 24 angeordneten Führungsring 31 abgestützt. Diese Führungsringe 29, 31 sind etwa 2,5 mm stark, wobei der riegelhebelseitige Führungsring 29 bevorzugt in einer Ausnehmung 35 des Anlenkbereiches 13 angeordnet ist. Die Führungsringe 29, 31 bestehen in vorteilhafter Weise aus einem druckbelastbaren Kunststoffmaterial. Ein Dichtungselement 36 an der Welle, welches im Bereich einer Hohlprofilöffnung 37 einer möglichen Verschmutzung des Hohlprofils entgegenwirkt, ist ebenfalls aus einem Kunststoffmaterial gefertigt.

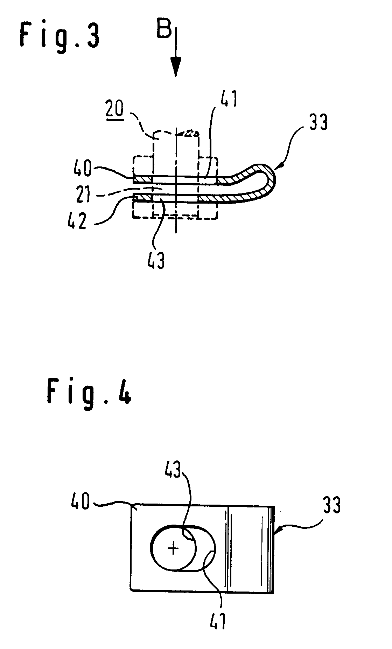

In Fig. 3 und 4 ist eine weitere mögliche Federausbildung gezeigt. Eine haarnadelartig geformte Blattfeder 33 weist einen riegelhebelseitigen Federschenkel 40 und einen hohlprofilseitigen Federschenkel 42 auf. Zur nahezu mittigen Führung des parallel und schräggestellten Bolzenschaftes 21 des Anlenkbolzens 20 ist im riegelhebelseitigen Federschenkel 40 ein Langlochöffnung 41 und im hohlprofilseitigen Federschenkel 42 eine kreisrunde Öffnung 43 ausgebildet.

Ein Öffnen des Riegelverschlusses und ein gefahrloses Abklappen einer an einem Hohlprofil, insbesondere an einer Runge angeriegelten Bordwand ist nur möglich, wenn kein Innendruck auf die Bordwand ausgeübt wird und der Anlenkbolzen aus einer Einraststellung in eine Schwenkstellung bewegt wird.

## Patentansprüche

1. Riegelverschluß für Bordwände mit einem in einem Hohlprofil (5), insbesondere in einer Runge, angeordneten Riegelhebel (4), welcher mit einem Verschlußhaken (12) und einer Anlenkachse (14) um eine Schwenkachse (10) verschwenkbar ist,
wobei der Verschlußhaken (12) in Verriegelungsstellung in einen Gegenhalter einer Bordwand eingreift und mit Hilfe eines im Bereich der Anlenkachse (14) angreifenden Bedienungselementes in eine Öffnungsstellung verschwenkbar ist,
dadurch **gekennzeichnet,**
daß der Riegelhebel (4) mit Spiel an der Schwenkachse (10) gelagert ist und
daß das Hohlprofil (5) und die Anlenkachse (14) mit komplementär ausgebildeten Rastelementen (15, 17) versehen sind, die bei einem an einer Bordwand anliegenden Innendruck von einer Schwenkstellung in eine Einraststellung gelangen und die Öffnungsbewegung des Riegelhebels (4) blockieren.

2. Riegelverschluß nach Anspruch 1,
dadurch **gekennzeichnet,**
daß als Rastelement (15) der Anlenkachse (14) ein im Riegelhebel (14) befestigter Anlenkbolzen (20) vorgesehen ist, der einen Bolzenschaft (21) parallel zur Schwenkachse (10) aufweist, und
daß als Rastelement (17) des Hohlprofils (5) eine Einrastöffnung (22) im Bereich einer Grundfläche (6) des Hohlprofils (5) ausgebildet ist, in welche der Anlenkbolzen (20) mit einem freien Bolzenende bei einem innendruckbelasteten, schräggestellten Riegelhebel (4) einrastet.

3. Riegelverschluß nach Anspruch 1 oder 2,
dadurch **gekennzeichnet,**
daß die Einrastöffnung (22) in einer Aufnahmeplatte (24) ausgebildet ist und
daß die Aufnahmeplatte (24) an der Grundfläche (6) des Hohlprofils (5) befestigt ist.

4. Riegelverschluß nach einem der Ansprüche 1 bis 3,
dadurch **gekennzeichnet,**
daß der Anlenkbolzen (20) druckbeaufschlagt in einer Schwenkstellung gehalten ist und bei einem vorgegebenen, auf den Verschlußhaken (12) ausgeübten Innendruck in die Einrastöffnung (22) einrastet.

5. Riegelverschluß nach Anspruch 4,
dadurch **gekennzeichnet,**
daß eine Druckfeder (23) um den Bolzenschaft (21) des Anlenkbolzens (20) angeordnet ist, die sich an einem riegelhebelseitigen Führungsring (29) und an einem Führungsring (31) an der Aufnahmeplatte (24) abstützt.

6. Riegelverschluß nach Anspruch 5,
dadurch **gekennzeichnet,**
daß eine Schraubendruckfeder (25) mit definierter Druckkraft um den Bolzenschaft (21) angeordnet ist.

7. Riegelverschluß nach Anspruch 5,
dadurch **gekennzeichnet,**
daß eine Blattfeder (33) mit definierter Druckkraft angeordnet ist,
daß die Blattfeder (33) haarnadelförmig gebogen ist und einen riegelhebelseitigen Federschenkel (40) sowie einen hohlprofilseitigen Federschenkel (42) aufweist,
daß zur Führung des Bolzenschaftes (21) in dem hohlprofilseitigen Federschenkel (42) eine kreisrunde Öffnung (43) und in dem riegelhebelseitigen Federschenkel (40) eine langlochartige Öffnung (41) ausgebildet ist.

8. Riegelverschluß nach einem der vorhergehenden Ansprüche,
dadurch **gekennzeichnet,**
daß die Schwenkachse (10) des Riegelhebels (4) horizontal angeordnet und von einer im Hohlprofil (5) fixierten Welle (8) gebildet ist, um die der Riegelhebel (4) vertikal verschwenkbar und in einer Schrägstellung gehalten ist.

9. Riegelverschluß nach Anspruch 8,
dadurch **gekennzeichnet,**
daß die Schrägstellung des Riegelhebels (4) nahezu fünf Grad beträgt.

10. Riegelverschluß nach einem der vorhergehenden Ansprüche,
dadurch **gekennzeichnet,**
daS die Welle (8) im Bereich einer Hohlprofilöffnung (37) für den Verschlußhaken (12) mit einem Dichtelement (36) versehen ist.

## Claims

1. A locking member for vehicle sides with a locking lever (4) located in a hollow profile (5), particularly in a stanchion, said locking lever (4) is pivotable with a locking hook (12) and an articulation axis (14) about a pivoting axis (10),
the locking hook (12) engages in a locking position in an abutment of a vehicle side and is pivotable into an opening position with the aid of a control element engaging in the area of the articulation axis (14),
**characterized** in that
the locking lever (4) is pivotable guided with clearance about the pivoting axis (10) and that
the hollow profile (5) and the articulation axis (14) are provided with complementary formed engagement elements (15, 17), which when an internal pressure acts on a vehicle side, pass from a pivoting position into an engagement position and block the opening movement of the locking lever (4).

2. Locking member according to claim 1,
**characterized** in that,
as engagement element (15) of the articulation axis (14) is provided an articulation bolt (20) fixed on the locking lever (4) and which comprises a bolt shank (21) parallel to the pivoting axis (10), and that as engagement element (17) of the hollow profile (5) an engagement opening (22) is formed in the area of a base surface (6) of the hollow profile (5), in which the articulation bolt (20) engages with a free bolt end in the case of an internal pressure-loaded, inclined lokking lever (4).

3. A locking member according to claim 1 or 2,
**characterized** in that
the engagement opening (22) is formed in a reception plate (24), and that
the reception plate (24) is fixed to the base surface (6) of the hollow profile (5).

4. A locking member according to one of the claims 1 to 3,
**characterized** in that
the articulation bolt (20) is held under pressure in a pivoting position and in the case of a predetermined internal pressure exerted on the locking hook (12) engages in the engagement opening (22).

5. A locking member according to claim 4,
**characterized** in that
a compression spring (23) is placed around the bolt shank (21) of the articulation bolt (20) and said compression spring (23) is supported on a locking lever-side guide ring (29) and on a guide ring (31) on the reception plate (24).

6. A locking member according to claim 5,
**characterized** in that
a helical compression spring (25) with a defined compressive force is arranged around the bolt shank (21).

7. A locking member according to claim 5,
**characterized** in that
a leaf spring (33) with a defined compressive force is arranged,
that said leaf spring (33) is bent in hairpin-like manner and has a locking lever-side spring leg (40) as well as a hollow profile-side spring leg (42), and that for guiding the bolt shank (21) in the hollow profile-side spring leg (42) is formed a circular opening (43) and in the locking lever-side spring leg (40) an elongated slot-like opening (41).

8. A locking member according to one of the preceding claims,
**characterized** in that
the pivoting axis (10) of the locking lever (4) is arranged horizontally and is formed by a shaft (8) fixed in the hollow profile (5) about said shaft (8) the locking lever (4) is vertically pivotable and is held in an inclined position.

9. A locking member according to claim 8,
**characterized** in that
the inclined position of the locking lever (4) is almost 5°.

10. A locking member according to one of the preceding claims,
**characterized** in that
the shaft (8) is provided with a sealing element (36) in the vicinity of a hollow profile opening (37) for the locking hook (12).

## Revendications

1. Fermeture à verrou pour ridelles, comportant un levier (4) de verrou monté dans un profilé creux (5), notamment dans un rancher, qui peut pivoter, avec un crochet de fermeture (12) et un axe de couplage (14), autour d'un axe de pivotement (10), le crochet de fermeture (12) pénétrant en position de verrouillage dans un élément conjugué d'une ridelle et pouvant être amené par pivotement dans une position d'ouverture à l'aide d'un élément d'actionnement qui agit dans la région de l'axe de couplage (14), caractérisé par, le fait que le levier de verrou (4) est monté avec jeu sur l'axe de pivotement (10) et que le profilé creux (5) et l'axe de couplage (14) sont pourvus d'éléments d'encliquetage (15, 17) complémentaires qui, lorsqu'une pression intérieure est appliquée sur la ridelle, passent d'une position de pivotement dans une position d'encliquetage et empêchent ainsi le mouvement d'ouverture du levier de verrou (4).

2. Fermeture à verrou selon la revendication 1, caractérisé par le fait qu'il est prévu comme élément d'encliquetage (15) de l'axe de couplage (14) un axe (20) fixé dans le levier de verrou (4), qui présente un fût (21) parallèle à l'axe de pivotement (10) et par le fait qu'une ouverture d'encliquetage (22) est aménagée dans la région d'une surface de base (6) du profilé creux (5), en tant qu'élément d'encliquetage (17) du profilé creux (5), ouverture dans laquelle l'axe (20) s'enclenche avec une extrémité libre lorsque le levier de verrou (4) est incliné et soumis à une pression intérieure.

3. Fermeture à verrou selon la revendication 1 ou 2, caractérisé par le fait que l'ouverture d'encliquetage (22) est aménagée dans une platine (24) et par le fait que la platine (24) est fixée sur la surface de base (6) du profilé creux (5).

4. Fermeture à verrou selon l'une des revendications 1 à 3, caractérisé par le fait que l'axe (20) est maintenu par pression dans une position de pivotement et s'enclenche dans l'ouverture d'encliquetage (22) lorsqu'une pression intérieure prédéterminée est appliquée sur le crochet de fermeture (12).

5. Fermeture à verrou selon la revendication 4, caractérisé par le fait qu'un ressort de compression (23) est disposé autour du fût (21) de l'axe (20), lequel ressort prend appui sur une bague de guidage (29) côté levier de verrou et sur une bague de guidage (31) sur la platine (24).

6. Fermeture à verrou selon la revendication 5, caractérisé par le fait qu'un ressort hélicoïdal de compression (25) avec une force élastique déterminée est disposé autour du fût (21) de l'axe.

7. Fermeture à verrou selon la revendication 5, caractérisé par le fait qu'un ressort à lame (33) avec une élastique déterminée est disposé que le ressort à lame (33) est courbé en épingle à cheveux et présente une aile (40) côté levier de verrou et une aile (42) côté profilé creux, par le fait que pour guider le fût (21) de l'axe, une ouverture (43) circulaire est aménagée dans l'aile (42) du ressort côté profilé creux et une ouverture (41) oblongue est aménagée dans l'aile (40) du ressort côté levier de verrou.

8. Fermeture à verrou selon l'une des revendications précédentes, caractérisé par le fait que l'axe de pivotement (10) du levier de verrou (4) est horizontal et est formé par un axe (8) fixé sur le profilé creux (5), autour duquel le levier de verrou (4) peut pivoter dans la direction verticale et est maintenu dans une position inclinée.

9. Fermeture à verrou selon la revendication 8, caractérisé par le fait que l'inclinaison du levier de verrou (4) est d'environ cinq degrés.

10. Fermeture à verrou selon l'une des revendications précédentes, caractérisé par le fait que l'axe (8) est pourvu d'un élément d'étanchéité (36) dans la région d'une ouverture (37) du profilé creux pour le crochet de fermeture (12).
